# EUROPEAN PATENT SPECIFICATION

(11) **EP 2 476 572 B1**
(45) Date of publication and mention of the grant of the patent: **12.06.2019**
(21) Application number: 11183657.3
(22) Date of filing: 03.10.2011
(51) Int. Cl.: B60K 31/00, B60W 30/14, B60W 30/18

(54) **Method for speed control, speed control system and device for use with the speed control system**
Verfahren zur Geschwindigkeitskontrolle, Geschwindigkeitskontrollsystem und Vorrichtung zur Verwendung mit dem Geschwindigkeitskontrollsystem
Procédé de contrôle de la vitesse, système de contrôle de la vitesse et dispositif pour une utilisation avec le système de contrôle de la vitesse

(30) Priority: 17.01.2011 EP 11151096
(43) Date of publication of application: 18.07.2012
(73) Proprietor: Volvo Car Corporation, 405 31 Göteborg (SE)
(72) Inventor: Almkvist, Göran, 44331 Lerum (SE); Granäng, Jan, 44250 Ytterby (SE)
(74) Representative: Valea AB

(56) References cited:
- WO-A1-2005/084995
- WO-A1-2008/130288
- WO-A1-2009/156318
- DE-A1- 10 145 915
- DE-A1- 19 700 325
- DE-A1-102008 000 629
- FR-A1- 2 849 411
- FR-A1- 2 861 860

## Description

### TECHNICAL FIELD

The present invention relates to a method for controlling the speed of a motor vehicle, a speed control system for a motor vehicle and a device for use with the speed control system.

### BACKGROUND OF THE INVENTION

It is well known that it is possible to improve the fuel economy of motor vehicles by using the so called "pulse and glide"-technology as default mode. The term "pulse and glide" refers in principal to a way of conveying a vehicle by alternatively accelerating the vehicle and setting it in an idle mode. The improvement in fuel economy is typically 10-30%. Use in practice however, is restricted by acceleration perception, NVH and traffic dynamic flow issues. A related technology investigated today is the so called "idle coast", where the engine of the vehicle is stopped or set to idling only during a coast mode. This however, will only have minor effects on the fuel economy in test cycles or in cruising or driving modes.

From the publication WO 2008/130288 a method is known for increasing the active duration of an automatic freewheeling function in a vehicle with cruise control and during a cruise control active period. The function comprises means for determining a vehicle set speed for when said function is allowed to be activated and means for calculating a predetermined allowable vehicle speed drop to a first under speed value below said vehicle set speed.

### SUMMARY OF THE INVENTION

To fully use the "pulse and glide"-technology, it is necessary to overcome the problems mentioned above.

Document DE 197 00 325 A1 discloses according to its abstract a vehicle having an IC engine connected to the gearbox by a clutch. This is controlled by a processor control which monitors the throttle setting and the vehicle dynamics, and which opens the clutch to allow the vehicle to freewheel whenever possible. During freewheeling the engine is at idling speed. The freewheel mode is applied when a steady speed has been maintained for a set time. The engine speed is increased again, and the clutch smoothly reapplied, when the vehicle speed drops to a set level below the required speed. The automatic control operates on the clutch and on the throttle to obtain a smooth ride

The object of the present invention is therefore, to propose a new way to utilize the "pulse and glide"-technology not only in coast mode but also in normal driving conditions.

Thus, based on said "pulse and glide"-technology, the above object is achieved according to the invention by presenting a method for controlling the speed of a motor vehicle, wherein at least one speed-related parameter of the vehicle is monitored, wherein the speed related parameter is the position of the gas pedal of the vehicle, wherein, when the monitored speed-related parameter of the vehicle meets a predetermined alteration pattern for a predetermined period of time, a nominal speed at which the vehicle shall be conveyed is determined, based on said monitored speed-related parameter of the vehicle, wherein the predetermined alteration pattern is met if the speed related parameter is substantially altered within the predetermined period of time, wherein, using a setting means, the engine of the vehicle is set in a driving mode or an idle mode at said nominal speed when said nominal speed has been determined and the monitored speed-related parameter meets the predetermined alteration pattern, wherein, using said setting means, the engine of the vehicle is set in an idle mode when the actual speed of the vehicle has exceeded said nominal speed by a predetermined maximum value without substantially altering the monitored speed-related parameter, wherein, using said setting means, the engine of the vehicle is set in the driving mode when the actual speed of the vehicle has decreased to said nominal speed or has fallen below said nominal speed by a predetermined maximum value without substantially altering the monitored speed-related parameter, and wherein, based on said fluctuations of the actual speed of the vehicle, said changes between driving mode and idle mode are repeated as long as the monitored speed-related parameter is substantially unaltered.

The predetermined alteration pattern is met if the speed-related parameter is substantially altered for the predetermined period of time. An example is ease of the gas pedal, so as to activate the glide mode. Once this ease is detected, the setting means are activated. By 'substantially altering' is meant change of at least 40 % in pedal position or in torque.

A speed-control system for performing the above-mentioned method comprises, according to the invention, a monitoring means which is configured to monitor at least one speed-related parameter of the vehicle, wherein the speed related parameter is the position of the gas pedal of the vehicle, a calculating means which, when the monitored speed-related parameter of the vehicle meets a predetermined alteration pattern for a predetermined period of time, is configured to determine a nominal speed at which the vehicle shall be conveyed based on said monitored, speed-related parameter of the vehicle, and a setting means, activatable by said calculating means, which upon activation is configured to set the engine of the vehicle in a driving mode or an idle mode at said nominal speed when said nominal speed has been determined and the monitored speed-related parameter meets the predetermined alteration pattern, to set the engine of the vehicle in an idle mode when the actual speed of the vehicle has exceeded said nominal speed by a predetermined maximum value without substantially altering the monitored speed-related parameter, to set the engine of the vehicle in the driving mode when the actual speed of the vehicle has decreased to said nominal speed or has fallen below said nominal speed by a predetermined maximum value without substantially altering the monitored speed-related parameter, and to repeat, based on said fluctuations of the actual speed of the vehicle, said changes between driving mode and idle mode as long as the monitored speed-related parameter is substantially unaltered.

Furthermore, in an attempt to extend the period of time during which the engine of the vehicle is set in the idle mode, there is provided, according to the present invention, a vehicle, comprising the above-mentioned speed control system for a motor vehicle as well as a device which in turn comprises an electric motor which is configured to apply power to the vehicle to keep constant speed or reduce deceleration of the vehicle when the engine of the vehicle is set in an idle mode, and an alternator which, when the engine of the vehicle is set in the idle mode, is operated by said engine for supplying electric power to the electric motor.

Thus, contrary to the above-mentioned prior art publication, the speed control system according to the present invention does not require and does not operate in connection with a cruise control. The speed control system according to the present invention further permits predetermined variations of the actual speed not only below the nominal speed, but also above said nominal speed before the system is deactivated.

### BRIEF DESCRIPTION OF THE DRAWINGS

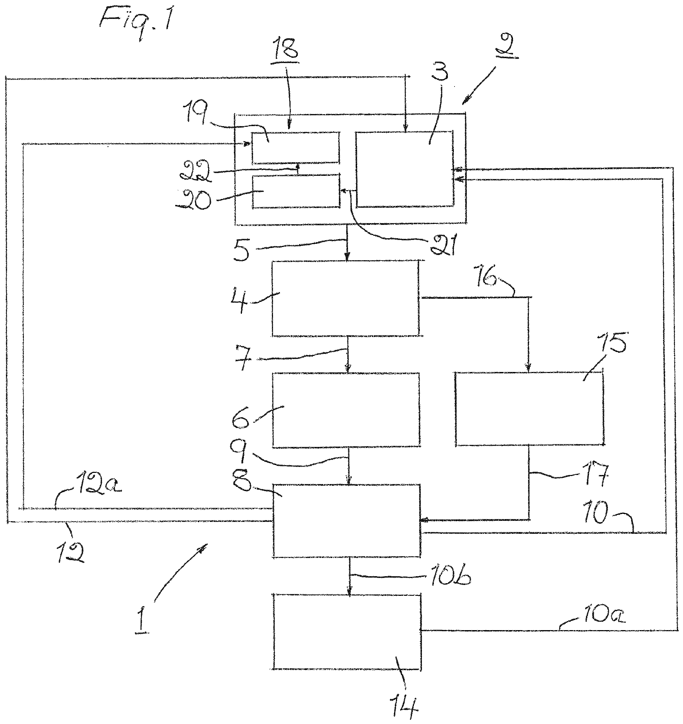

The present invention will be further described below by way of example only and with reference to the accompanying drawing, in which fig. 1 is a schematic view of a simple embodiment of a speed-control system as well as a device for use therewith according to the invention.

### DETAILED DESCRIPTION OF PREFERRED EMBODIMENTS

As is apparent from the above and from Fig. 1, the speed control system 1 according to the present invention is adapted for use in a motor vehicle 2 provided with an internal combustion engine 3 of a suitable type.

The speed control system 1 comprises in an embodiment, inter alia, a monitoring means 4 which is configured to monitor at least one suitable speed-related parameter of the vehicle 2. This monitored speed-related parameter is the position of the gas pedal of the vehicle 2. Indications of the position and/or of the value of the monitored speed-related parameter are fed from the speed-related parameter in question to the monitoring means 4 via a line 5. These indications may be signals generated by e.g. a sensor means of a suitable type or by any other suitable indicator means. Accordingly, any changes of the speed-related parameter, e.g. changes of the position of the gas pedal, will immediately be detected and information about these changes transferred to the monitoring means 4 via the line 5.

The speed control system 1 further comprises a calculating means 6. When the monitored speed-related parameter has been substantially unaltered for a predetermined period of time, typically about 1-10 seconds, the calculating means 6 is configured to determine a nominal speed at which the vehicle 2 shall be conveyed. This nominal speed is then based on the monitored, substantially unaltered speed-related parameter of the vehicle 2, i.e. the nominal speed depends on at what relatively constant speed the driver has conveyed the vehicle during said predetermined period of time. That the speed-related parameter shall be "substantially unaltered" means e.g. that the driver is allowed to move the gas pedal by a small extent and thereby change the speed within a small interval without interrupting the process of determining the nominal speed of the vehicle 2. The sensitivity of the speed control system 1 can be regulated, but in principal, this means that the driver can not move the gas pedal such that the movements can be interpreted as if the driver wants to accelerate or decelerate the vehicle. Thus, as indicated below, the movements of the gas pedal may not be so extensive that the speed increases or decreases more than e.g. about 5 km/h. Information from the monitoring means 4 about the speed-related parameter, e.g. the position and/or value of the monitored speed-related parameter, is transferred to the calculating means 6 via a line 7.

When the nominal speed has been determined and, optionally, ambient conditions which may be considered are satisfactory, the calculating means 6 will activate a setting means 8 which is also a part of the speed control system 1 of the present invention. The setting means 8 is configured, upon activation by the calculating means 6, to set the engine 3 of the vehicle 2 typically in a driving mode at said nominal speed when said nominal speed has been determined and the monitored speed-related parameter is kept substantially unaltered. This means that the engine 3 is operating and drives the vehicle 2 at said nominal speed. The actual speed may, as indicated above, vary around the nominal speed to some extent without leaving the driving mode. A signal for activation of the setting means 8 is transferred from the calculating means 6 via a line 9 to said setting means. The setting means 8 sets the engine 3 in driving mode via a setting signal on a line 10.

The setting means 8 is also configured to set the engine 3 of the vehicle 2 in an idle mode when the actual speed of the vehicle has exceeded said nominal speed by a predetermined maximum value without substantially altering the monitored speed-related parameter. This is done via a setting signal on a line 12. This upper limit of the interval for the nominal speed within which the actual speed of the vehicle 2 may vary without interrupting the operation of the speed control system according to the present invention, is reached e.g. when the vehicle is driven downhill. It can also be reached if the setting means 8 is configured, each time the engine 3 of the vehicle 2 is set in a driving mode, to accelerate the vehicle and acceleration is continued until the actual speed of the vehicle has exceeded said nominal speed by said predetermined maximum value without substantially altering the monitored speed-related parameter. The acceleration rate may be e.g. about 0,1-0,6 m/s². The predetermined maximum value may be about 5 km/h, i.e. the setting means 8 is configured to set the engine 3 of the vehicle 2 in an idle mode when the actual speed of the vehicle has exceeded said nominal speed by about 5 km/h without substantially altering the monitored speed-related parameter.

The setting means 8 is configured to set the engine of the vehicle in the driving mode, via the line 10, when the actual speed of the vehicle 2 has decreased to said nominal speed or has fallen below said nominal speed by a predetermined maximum value without substantially altering the monitored speed-related parameter. This predetermined value may also be about 5 km/h, i.e. the setting means 8 is configured to set the engine 3 of the vehicle 2 in the driving mode when the actual speed of the vehicle has decreased to said nominal speed or has fallen below said nominal speed by about 5 km/h without substantially altering the monitored speed-related parameter.

Accordingly, the setting means 8 is configured to be active as long as the speed of the vehicle is within an interval of the nominal speed +/- 5 km/h.

The setting means 8, finally, is configured to repeat, based on said fluctuations of the actual speed of the vehicle 2, said changes between driving mode and idle mode as long as the monitored speed-related parameter is substantially unaltered, i.e. send setting signals to the engine when required in view of the actual speed of the vehicle compared to the determined nominal speed.

It should be noted that, under certain circumstances, the setting means 8 is configured, when activated, to set the engine 3 of the vehicle 2 in an idle mode, e.g. when driving downhill within a predetermined interval of the nominal speed, but will in such case, as is obvious from the above, change to driving mode when the nominal speed has been reached or at least when the actual speed of the vehicle has reached the lower limit of the interval for the nominal speed. Accordingly, the speed control system will start in a different mode, but will thereafter continue operating in the same manner and change between driving mode and idle mode as described above.

The speed control system 1 further comprises a control means 14 which is configured to accelerate the vehicle 2 and/or increase the torque of the engine 3 of the vehicle to compensate for e.g. uphill driving and/or increased vehicle load without substantially altering the monitored speed-related parameter. Thus, this acceleration is also carried through only within the predetermined interval of the nominal speed, i.e. as long as the speed control system 1 is operating. An acceleration signal is sent from the control means 14 to the engine 3 of the vehicle via a line 10a. If in idle mode when e.g. uphill driving begins, the system first changes to driving mode and then, if this is not sufficient, the control means 14 is activated (via a line 10b) to keep the actual speed within said interval of the nominal speed. The control means 14 is configured to accelerate the vehicle 2 about 0,1-0,6 m/s² to compensate for e.g. uphill driving and/or vehicle load without substantially altering the monitored speed-related parameter. This acceleration is acceptable to most drivers and passengers.

The speed control system 1 also comprises an interrupt control 15 which is configured to detect substantial alterations of monitored speed-related parameters of the vehicle and in view thereof deactivate the setting means 8. The interrupt control 15 is thus configured to detect e.g. substantial braking, substantial gas-pedal movement and substantial uphill driving and, in view thereof, deactivate the setting means. This means that the interrupt control 15 is connected to the monitoring means 4 via a line 16 for receiving information about the monitored speed-related parameter and is connected to send signals for deactivating the setting means 8 via a line 17.

In the embodiment described above, the speed control system 1 is primarily outlined to control, through the setting means 8, the actual speed of the vehicle 2 such that, as long as the speed-related parameter is substantially unaltered, said actual speed remains within a predetermined speed interval above and below the nominal speed. In driving mode, the speed control system 1 allows the actual speed to increase within this speed interval during e.g. driving downhill or if the speed control system is constructed to continuously accelerate the vehicle 2. At maximum actual speed, the speed control system 1 changes to idle mode and the actual speed is decreased to at least the determined nominal speed or to the lowest actual speed within said speed interval. During uphill driving, the control means 14 of the speed control system 1 is activated to accelerate the vehicle 2, particularly if the actual speed has reached the lower limit of the above-mentioned speed interval. Finally, when the acceleration or retardation of the vehicle 2 goes beyond the predetermined speed interval since e.g. the driver alters the position of the gas pedal to a substantial extent, the interrupt control 15 of the speed control system 1 deactivates the setting means 8 and the vehicle 2 must be conveyed in a conventional manner.

When the monitored speed-related parameter has been substantially altered (instead of unaltered) within a predetermined period of time, typically about 0,4-5. seconds, glide mode will be activated. The calculating means 6 will then determine a nominal speed at which the vehicle 2 shall be conveyed. This nominal speed is then based on the monitored substantially altered speed-related parameter of the vehicle 2. It may be calculated using a pedal-position/torque map of the vehicle, as will be known by the skilled person. The nominal speed may be continuously altered by the driver's change of the position of the accelerator pedal.

An example of such an altering pattern occurs when the driver eases the gas pedal, in order to actively start the glide mode. In an embodiment, the predetermined pedal position is about 40-60 % of the pedal position before the ease. These values will be user friendly for the driver. It is preferable that glide mode is activated relatively fast after substantial pedal changes. Once a predetermined lower threshold below the calculated nominal speed is reached, the motor will be activated by a pulse, after which a glide may occur, etc..

It is possible to use the speed control system 1 according to the present invention and the "pulse and glide"- technology provided thereby as the normal driving mode without negative impact on the acceleration perception by, during the idle mode, applying by means of an electric motor, power to the vehicle 2 to keep a constant speed or reduce the acceleration. Further, it is possible, in glide mode, to drive an alternator and supply electric power to the electric motor without storage in the battery of the vehicle 2. This results in optimized fuel consumption. It also results in an improved efficiency combustion timing, lambda and lower engine speed, reduced drive train friction etc..

Accordingly, a device 18 for use with the speed control system 1 described above is provided. This device 18 is in the embodiment according to Fig. 1 incorporated in the vehicle 2 in any suitable manner. The device 18 comprises, as indicated, an electric motor 19 which is configured to apply power to the vehicle 2 to maintain constant speed or reduce deceleration of the vehicle when the engine 3 of the vehicle is set in an idle mode, and an alternator 20 which, when the engine of the vehicle is set in the idle mode, is operated by said engine (via a line 21) for supplying electric power to the electric motor via a line 22. Thus, in the embodiment illustrated in Fig. 1, when the signal on line 12 from the setting means 8 for setting the engine 3 of the vehicle 2 in idle mode is sent to the engine, a signal from the setting means to activate the electric motor 19 is sent simultaneously to the electric motor via a line 12a.

It is possible to use conventional components such as 2-5 kW electric motor 19 and alternator 20 and minor software changes for control. Thereby, sufficient power is supplied to keep a constant speed around about 50 km/h and the range of the idle mode is vastly extended. The system voltage may also be optimized from a 12V conventional alternator to a higher voltage alternator either continuously or higher voltage only during the idle mode.

Further according to the invention, the electric motor 19 is configured to operate as a brake recuperator generator alone or in combination with the alternator 20.

The speed control system 1 and the device 18 therefor can be applied to all types of engines (Otto, Diesel, turbo etc.). The speed control system 1 and the device 18 therefor can also be used with automatic gearboxes as well as with manual gearboxes and an electric clutch.

It is obvious to a skilled person that the present invention can be modified within the scope of the subsequent claims without departing from the scope of the invention. Thus, the speed control system described above may be provided with additional means for monitoring additional speed-related parameters and/or for monitoring ambient conditions and/or other vehicle and engine parameters than those related to the speed of the vehicle. Further, it is obvious that irrespective of in which mode the speed control system is activated, it operates as described above, in a repeating manner, changing between the driving mode and the idle mode based on the actual speed of the vehicle relative to the nominal speed thereof.

## Claims

1. Method for controlling the speed of a motor vehicle, the method comprising:
monitoring at least one speed-related parameter of the vehicle (2), wherein the speed related parameter is the position of the gas pedal of the vehicle (2),
determining, when the monitored speed-related parameter of the vehicle (2) meets a predetermined alteration pattern for a predetermined period of time, a nominal speed at which the vehicle shall be conveyed based on said monitored speed-related parameter of the vehicle, wherein the predetermined alteration pattern is met if the speed-related parameter is substantially altered within the predetermined period of time,
setting, using a setting means (8), the engine (3) of the vehicle (2) in a driving mode or an idle mode at said nominal speed when said nominal speed has been determined and the monitored speed-related parameter meets the predetermined alteration pattern,
setting, using said setting means (8), the engine (3) of the vehicle (2) in an idle mode when the actual speed of the vehicle has exceeded said nominal speed by a predetermined maximum value without substantially altering the monitored speed-related parameter,
setting, using said setting means (8), the engine (3) of the vehicle (2) in the driving mode when the actual speed of the vehicle has decreased to said nominal speed or has fallen below said nominal speed by a predetermined maximum value without substantially altering the monitored speed-related parameter, and
repeating, based on said fluctuations of the actual speed of the vehicle, said changes between driving mode and idle mode as long as the monitored speed-related parameter is substantially unaltered.

2. Method according to any of the preceding claims, **characterized by** accelerating the vehicle (2), each time the engine (3) of the vehicle is set in the driving mode, until the actual speed of the vehicle has exceeded said nominal speed by a predetermined maximum value without substantially altering the monitored speed-related parameter.

3. Method according to any of the preceding claims, **characterized by** accelerating the vehicle (2) and/or increasing the torque of the engine (3) of the vehicle to compensate for e.g. uphill driving and/or increased vehicle load without substantially altering the monitored speed-related parameter.

4. Method according to any one of the preceding claims, **characterized by** detecting substantial alterations of monitored speed-related parameters of the vehicle (2), and deactivating the setting means (8) in view thereof.

5. Method according to any one of the preceding claims, **characterized by** detecting substantial braking, substantial gas-pedal movement and substantial uphill driving, and
deactivating the setting means (8) in view thereof.

6. Speed control system for a motor vehicle, the speed control system (1) comprising:
a monitoring means (4) which is configured to monitor at least one speed-related parameter of the vehicle (2) wherein the monitored speed-related parameter is the position of the gas pedal of the vehicle (2),
a calculating means (6) which, when the monitored speed-related parameter of the vehicle (2) meets a predetermined alteration pattern for a predetermined period of time, is configured to determine a nominal speed at which the vehicle shall be conveyed based on said monitored speed-related parameter of the vehicle, wherein the predetermined alteration pattern is met if the speed-related parameter is substantially altered within the predetermined period of time, and
a setting means (8), activatable by said calculating means (6), which upon activation is configured to set the engine (3) of the vehicle (2) in a driving mode or an idle mode at said nominal speed when said nominal speed has been determined and the monitored speed-related parameter meets the predetermined alteration pattern, to set the engine (3) of the vehicle (2) in the idle mode when the actual speed of the vehicle has exceeded said nominal speed by a predetermined maximum value without substantially altering the monitored speed-related parameter, to set the engine (3) of the vehicle (2) in the driving mode when the actual speed of the vehicle has decreased to said nominal speed or has fallen below said nominal speed by a predetermined maximum value without substantially altering the monitored speed-related parameter, and to repeat, based on said fluctuations of the actual speed of the vehicle (2), said changes between driving mode and idle mode as long as the monitored speed-related parameter is substantially unaltered.

7. Speed control system according to claim 6, **characterized in that** the pattern comprises a decrease of about 40-60 % of the current value of the speed-related parameter.

8. Speed control system according to claim 6 or 7, **characterized in that** the predetermined time ranges between 0,4-5 sec.

9. Speed control system according to any one of claims 6-8, **characterized in that** the calculating means (6) is configured to determine a nominal speed at which the vehicle (2) is conveyed after about 1-10 seconds of monitoring a substantially unaltered speed-related parameter of the vehicle.

10. Speed control system according to any one of claim 6-9, **characterized in that** the setting means (8) is configured, each time the engine (3) of the vehicle (2) is set in a driving mode, to accelerate the vehicle until the actual speed of the vehicle has exceeded said nominal speed by a predetermined maximum value without substantially altering the monitored speed-related parameter.

11. Speed control system according to claim 10, **characterized in that** the setting means (8) is configured, each time the engine (3) of the vehicle (2) is set in a driving mode, to accelerate the vehicle by about 0,1-0,6 m/s² until the actual speed of the vehicle has exceeded said nominal speed by a predetermined maximum value without substantially altering the monitored speed-related parameter.

12. Speed control system according to any one of claims 6-11, **characterized in that** the setting means (8) is configured to set the engine (3) of the vehicle (2) in an idle mode when the actual speed of the vehicle has exceeded said nominal speed by about 5 km/h without substantially altering the monitored speed-related parameter.

13. Speed control system according to any one of claims 6-12, **characterized in that** the setting means (8) is configured to set the engine (3) of the vehicle (2) in a driving mode when the actual speed of the vehicle has decreased to said nominal speed or has fallen below said nominal speed by about 5 km/h without substantially altering the monitored speed-related parameter.

14. Speed control system according to any one of claims 6-13, **characterized in that** the speed control system (1) further comprises a control means (14) which is con-figured to accelerate the vehicle (2) and/or increase the torque of the engine (3) of the vehicle to compensate for e.g. uphill driving and/or increased vehicle load without substantially altering the monitored speed-related parameter.

15. Speed control system according to claim 14, **characterized in that** the control means (14) is configured to accelerate the vehicle (2) about 0,1-0,6 m/s² to compensate for e.g. uphill driving and/or vehicle load without substantially altering the monitored speed-related parameter.

16. Speed control system according to any one of claims 1-15, **characterized in that** the speed control system (1) further comprises an interrupt control (15) which is configured to detect substantial alterations of monitored speed-related parameters of the vehicle (2) and in view thereof deactivate the setting means (8).

17. Speed control system according to any one of claims 6-16, **characterized in that** the speed control system (1) further comprises an interrupt control (15) which is configured to detect substantial braking, substantial gas-pedal movement and substantial uphill driving and in view thereof deactivate the setting means (8).

18. Vehicle, **characterized by** comprising the speed control system according to any one of claims 6-19 and an electric motor (19) which is configured to apply power to the vehicle (2) to keep constant speed or reduce deceleration of the vehicle when the engine (3) of the vehicle is set in an idle mode, and an alternator (20) which, when the engine (3) of the vehicle (2) is set in the idle mode, is operated by said engine for supplying electric power to the electric motor (19).

19. Vehicle according to claim 18, **characterized in that** the electric motor (19) is configured to operate as a brake recuperator generator alone or in combination with the alternator (20).

## Patentansprüche

1. Verfahren zum Kontrollieren der Geschwindigkeit eines Kraftfahrzeugs, wobei das Verfahren Folgendes umfasst:
Überwachen mindestens eines geschwindigkeitsbezogenen Parameters des Fahrzeugs (2), wobei der geschwindigkeitsbezogene Parameter die Position des Gaspedals des Fahrzeugs (2) ist,
Bestimmen, wenn der überwachte geschwindigkeitsbezogene Parameter des Fahrzeugs (2) für einen vorbestimmten Zeitraum einem vorbestimmten Änderungsmuster entspricht, einer Nenngeschwindigkeit, bei der das Fahrzeug auf der Grundlage des überwachten geschwindigkeitsbezogenen Parameters des Fahrzeugs befördert werden sollte, wobei das vorbestimmte Änderungsmuster gegeben ist, wenn sich der geschwindigkeitsbezogene Parameter innerhalb des vorbestimmten Zeitraums wesentlich verändert hat,
Einstellen, unter Verwendung eines Einstellungsmittels (8), des Motors (3) des Fahrzeugs (2) in einen Fahrmodus oder einen Leerlaufmodus bei der Nenngeschwindigkeit, wenn die Nenngeschwindigkeit festgestellt wurde und der überwachte geschwindigkeitsbezogene Parameter dem vorbestimmten Änderungsmuster entspricht,
Einstellen, unter Verwendung des Einstellungsmittels (8), des Motors (3) des Fahrzeugs (2) in einen Leerlaufmodus, wenn die aktuelle Geschwindigkeit des Fahrzeugs die Nenngeschwindigkeit um einen vorbestimmten Maximalwert überschritten hat, ohne den überwachten geschwindigkeitsbezogenen Parameter wesentlich zu verändern,
Einstellen, unter Verwendung des Einstellungsmittels (8), des Motors (3) des Fahrzeugs (2) in den Fahrmodus, wenn sich die aktuelle Geschwindigkeit des Fahrzeugs auf die Nenngeschwindigkeit verringert hat oder um einen vorbestimmten Maximalwert unter die Nenngeschwindigkeit gefallen ist, ohne den überwachten geschwindigkeitsbezogenen Parameter wesentlich zu verändern, und
Wiederholen, auf der Grundlage der Schwankungen der aktuellen Geschwindigkeit des Fahrzeugs, der Veränderungen zwischen Fahrmodus und Leerlaufmodus, solange der überwachte geschwindigkeitsbezogene Parameter im Wesentlichen unverändert ist.

2. Verfahren nach einem der vorangehenden Ansprüche, **gekennzeichnet durch**
Beschleunigen des Fahrzeugs (2) jedes Mal, wenn der Motor (3) des Fahrzeugs in den Fahrmodus gesetzt wird, bis die aktuelle Geschwindigkeit des Fahrzeugs die nominelle Geschwindigkeit um einen vorbestimmten Maximalwert überschritten hat, ohne den überwachten geschwindigkeitsbezogenen Parameter wesentlich zu verändern.

3. Verfahren nach einem der vorangehenden Ansprüche, **gekennzeichnet durch**
Beschleunigen des Fahrzeugs (2) und/oder Erhöhen des Drehmoments des Motors (3) des Fahrzeugs, um beispielsweise ein Bergauffahren und/oder eine erhöhte Fahrzeuglast auszugleichen, ohne den überwachten geschwindigkeitsbezogenen Parameter wesentlich zu verändern.

4. Verfahren nach einem der vorangehenden Ansprüche, **gekennzeichnet durch**
Erkennen wesentlicher Änderungen der überwachten geschwindigkeitsbezogenen Parameter des Fahrzeugs (2) und Deaktivieren des Einstellungsmittels (8) angesichts dessen.

5. Verfahren nach einem der vorangehenden Ansprüche, **gekennzeichnet durch**
Erkennen eines wesentlichen Bremsens, einer wesentlichen Gaspedalbewegung und einer wesentlichen Bergauffahrt, und
Deaktivieren des Einstellungsmittels (8) angesichts dessen.

6. Geschwindigkeitskontrollsystem für ein Kraftfahrzeug, wobei das Geschwindigkeitskontrollsystem (1) Folgendes umfasst:
ein Überwachungsmittel (4), das dazu ausgelegt ist, mindestens einen geschwindigkeitsbezogenen Parameter des Fahrzeugs (2) zu überwachen, wobei der überwachte geschwindigkeitsbezogene Parameter die Position des Gaspedals des Fahrzeugs (2) ist,
ein Berechnungsmittel (6), das dann, wenn der überwachte geschwindigkeitsbezogene Parameter des Fahrzeugs (2) für einen vorbestimmten Zeitraum einem vorbestimmten Änderungsmuster entspricht, dazu ausgelegt ist, eine Nenngeschwindigkeit zu bestimmen, bei der das Fahrzeug auf der Grundlage des überwachten geschwindigkeitsbezogenen Parameters des Fahrzeugs befördert werden sollte, wobei das vorbestimmte Änderungsmuster gegeben ist, wenn sich der geschwindigkeitsbezogene Parameter innerhalb des vorbestimmten Zeitraums wesentlich verändert hat, und
ein Einstellungsmittel (8), aktivierbar von dem Berechnungsmittel (6), das bei Aktivierung dazu ausgelegt ist, den Motor (3) des Fahrzeugs (2) in einen Fahrmodus oder einen Leerlaufmodus bei der Nenngeschwindigkeit einzustellen, wenn die Nenngeschwindigkeit bestimmt wurde und der überwachte geschwindigkeitsbezogene Parameter dem vorbestimmten Änderungsmuster entspricht, den Motor (3) des Fahrzeugs (2) in den Leerlaufmodus einzustellen, wenn die aktuelle Geschwindigkeit des Fahrzeugs die Nenngeschwindigkeit um einen vorbestimmten Maximalwert überschritten hat, ohne den überwachten geschwindigkeitsbezogenen Parameter wesentlich zu verändern, den Motor (3) des Fahrzeugs (2) in den Fahrmodus einzustellen, wenn sich die aktuelle Geschwindigkeit des Fahrzeugs auf die Nenngeschwindigkeit verringert hat oder um einen vorbestimmten Maximalwert unter die Nenngeschwindigkeit gefallen ist, ohne den überwachten geschwindigkeitsbezogenen Parameter wesentlich zu verändern, und um auf der Grundlage der Schwankungen der aktuellen Geschwindigkeit des Fahrzeugs (2) die Veränderungen zwischen Fahrmodus und Leerlaufmodus zu wiederholen, solange der überwachte geschwindigkeitsbezogene Parameter im Wesentlichen unverändert ist.

7. Geschwindigkeitskontrollsystem nach Anspruch 6, **dadurch gekennzeichnet, dass** das Muster einen Rückgang des aktuellen Wertes des geschwindigkeitsbezogenen Parameters um etwa 40-60 % umfasst.

8. Geschwindigkeitskontrollsystem nach Anspruch 6 oder 7, **dadurch gekennzeichnet, dass** die vorbestimmte Zeit zwischen 0,4-5 s liegt.

9. Geschwindigkeitskontrollsystem nach einem der Ansprüche 6-8, **dadurch gekennzeichnet, dass** das Berechnungsmittel (6) dazu ausgelegt ist, nach etwa 1-10 Sekunden der Überwachung eines im Wesentlichen unveränderten geschwindigkeitsbezogenen Parameters des Fahrzeugs eine Nenngeschwindigkeit festzustellen, bei welcher das Fahrzeug (2) befördert wird.

10. Geschwindigkeitskontrollsystem nach einem der Ansprüche 6-9, **dadurch gekennzeichnet, dass** das Einstellungsmittel (8) dazu ausgelegt ist, bei jedem Mal, bei dem der Motor (3) des Fahrzeugs (2) in einen Fahrmodus eingestellt wird, das Fahrzeug zu beschleunigen, bis die aktuelle Geschwindigkeit des Fahrzeugs die Nenngeschwindigkeit um einen vorbestimmten Maximalwert überschritten hat, ohne den überwachten geschwindigkeitsbezogenen Parameter wesentlich zu verändern.

11. Geschwindigkeitskontrollsystem nach Anspruch 10, **dadurch gekennzeichnet, dass** das Einstellungsmittel (8) dazu ausgelegt ist, bei jedem Mal, bei dem der Motor (3) des Fahrzeugs (2) in einen Fahrmodus eingestellt wird, das Fahrzeug um etwa 0,1-0,6 m/s² zu beschleunigen, bis die aktuelle Geschwindigkeit des Fahrzeugs die Nenngeschwindigkeit um einen vorbestimmten Maximalwert überschritten hat, ohne den überwachten geschwindigkeitsbezogenen Parameter wesentlich zu verändern.

12. Geschwindigkeitskontrollsystem nach einem der Ansprüche 6-11, **dadurch gekennzeichnet, dass** das Einstellungsmittel (8) dazu ausgelegt ist, den Motor (3) des Fahrzeugs (2) in einen Leerlaufmodus einzustellen, wenn die tatsächliche Geschwindigkeit des Fahrzeugs die Nenngeschwindigkeit um etwa 5 km/h überschritten hat, ohne den überwachten geschwindigkeitsbezogenen Parameter wesentlich zu verändern.

13. Geschwindigkeitskontrollsystem nach einem der Ansprüche 6-12, **dadurch gekennzeichnet, dass** das Einstellungsmittel (8) dazu ausgelegt ist, den Motor (3) des Fahrzeugs (2) in einen Fahrmodus einzustellen, wenn sich die aktuelle Geschwindigkeit des Fahrzeugs auf die Nenngeschwindigkeit verringert hat oder um etwa 5 km/h unter die Nenngeschwindigkeit gefallen ist, ohne den überwachten geschwindigkeitsbezogenen Parameter wesentlich zu verändern.

14. Geschwindigkeitskontrollsystem nach einem der Ansprüche 6-13, **dadurch gekennzeichnet, dass** das Geschwindigkeitskontrollsystem (1) ferner ein Kontrollmittel (14) umfasst, das dazu ausgelegt ist, das Fahrzeug (2) zu beschleunigen und/oder das Drehmoment des Motors (3) des Fahrzeugs zu erhöhen, um beispielsweise ein Bergauffahren und/oder eine Fahrzeuglast auszugleichen, ohne den überwachten geschwindigkeitsbezogenen Parameter wesentlich zu verändern.

15. Geschwindigkeitskontrollsystem nach Anspruch 14, **dadurch gekennzeichnet, dass** das Kontrollmittel (14) dazu ausgelegt ist, das Fahrzeug (2) um etwa 0,1-0,6 m/s² zu beschleunigen, um beispielsweise ein Bergauffahren und/oder eine erhöhte Fahrzeuglast auszugleichen, ohne den überwachten geschwindigkeitsbezogenen Parameter wesentlich zu verändern.

16. Geschwindigkeitskontrollsystem nach einem der Ansprüche 1-15, **dadurch gekennzeichnet, dass** das Geschwindigkeitskontrollsystem (1) ferner eine Unterbrechungskontrolle (15) umfasst, die dazu ausgelegt ist, wesentliche Änderungen überwachter geschwindigkeitsbezogener Parameter des Fahrzeugs (2) zu erkennen und angesichts dessen das Einstellungsmittel (8) zu deaktivieren.

17. Geschwindigkeitskontrollsystem nach einem der Ansprüche 6-16, **dadurch gekennzeichnet, dass** das Geschwindigkeitskontrollsystem (1) ferner eine Unterbrechungskontrolle (15) umfasst, die dazu ausgelegt ist, ein wesentliches Bremsen, eine wesentliche Gaspedalbewegung und ein wesentliches Bergauffahren zu erkennen und angesichts dessen das Einstellungsmittel (8) zu deaktivieren.

18. Fahrzeug, **dadurch gekennzeichnet, dass** es das Geschwindigkeitskontrollsystem nach einem der Ansprüche 6-19 und einen Elektromotor (19), der dazu ausgelegt ist, Energie auf das Fahrzeug (2) anzuwenden, um eine konstante Geschwindigkeit zu halten oder ein Abbremsen des Fahrzeugs zu reduzieren, wenn der Motor (3) des Fahrzeugs in einen Leerlaufmodus eingestellt ist, sowie eine Lichtmaschine (20) umfasst, die dann, wenn der Motor (3) des Fahrzeugs (2) in den Leerlaufmodus eingestellt ist, von dem Motor betrieben wird, um Elektroenergie an den Elektromotor (19) zu liefern.

19. Fahrzeug nach Anspruch 18, **dadurch gekennzeichnet, dass** der Elektromotor (19) dazu ausgelegt ist, als Bremsrekuperator allein oder in Kombination mit der Lichtmaschine (20) zu fungieren.

## Revendications

1. Procédé pour commander la vitesse d'un véhicule automobile, les opérations consistant à :
surveiller au moins un paramètre lié à la vitesse du véhicule (2),
dans lequel le paramètre lié à la vitesse est la position de la pédale d'accélérateur du véhicule (2) ;
déterminer, quand le paramètre lié à la vitesse du véhicule (2) qui est surveillé satisfait un schème prédéterminé de modification pendant une période prédéterminée, une vitesse nominale à laquelle le véhicule doit être déplacé sur la base dudit paramètre lié à la vitesse du véhicule qui est surveillé,
dans lequel le schème prédéterminé de modification est satisfait si le paramètre lié à la vitesse est sensiblement modifié dans la période prédéterminée ;
régler, à l'aide d'un moyen de réglage (8), le moteur thermique (3) du véhicule (2) dans un mode de roulage ou un mode de ralenti à ladite vitesse nominale quand ladite vitesse nominale a été déterminée et que le paramètre lié à la vitesse qui est surveillé satisfait le schème prédéterminé de modification ;
régler, à l'aide dudit moyen de réglage (8), le moteur thermique (3) du véhicule (2) dans un mode de ralenti quand la vitesse réelle du véhicule a dépassé ladite vitesse nominale d'une valeur maximale prédéterminée sans modifier sensiblement le paramètre lié à la vitesse qui est surveillé ;
régler, à l'aide dudit moyen de réglage (8), le moteur thermique (3) du véhicule (2) dans le mode de roulage quand la vitesse réelle du véhicule a diminué jusqu'à ladite vitesse nominale ou est tombée en dessous de ladite vitesse nominale d'une valeur maximale prédéterminée sans modifier sensiblement le paramètre lié à la vitesse qui est surveillé ; et
répéter, sur la base des dites fluctuations de la vitesse réelle du véhicule, lesdits changements entre le mode de roulage et le mode de ralenti tant que le paramètre lié à la vitesse qui est surveillé est sensiblement inchangé.

2. Procédé selon l'une quelconque des revendications précédentes, **caractérisé par** l'opération consistant à accélérer le véhicule (2), chaque fois que le moteur thermique (3) du véhicule est réglé dans le mode de roulage, jusqu'à ce que la vitesse réelle du véhicule ait dépassé ladite vitesse nominale d'une valeur maximale prédéterminée sans modifier sensiblement le paramètre lié à la vitesse qui est surveillé.

3. Procédé selon l'une quelconque des revendications précédentes, **caractérisé par** l'opération consistant à accélérer le véhicule (2) et/ou augmenter le couple du moteur thermique (3) du véhicule pour compenser par ex. un roulage en montée et/ou une augmentation de la charge du véhicule sans modifier sensiblement le paramètre lié à la vitesse qui est surveillé.

4. Procédé selon l'une quelconque des revendications précédentes, **caractérisé par** l'opération consistant à détecter des modifications notables de paramètres liés à la vitesse du véhicule (2) qui sont surveillés et désactiver en vue de cela le moyen de réglage (8).

5. Procédé selon l'une quelconque des revendications précédentes, **caractérisé par** les opérations consistant à :
détecter un freinage notable, un mouvement notable de la pédale d'accélérateur et un roulage notable en montée, et
désactiver en vue de cela le moyen de réglage (8).

6. Système de commande de vitesse pour un véhicule automobile, le système (1) de commande de vitesse comprenant :
un moyen de surveillance (4) pour surveiller au moins un paramètre lié à la vitesse du véhicule (2), dans lequel le paramètre lié à la vitesse qui est surveillé est la position de la pédale d'accélérateur du véhicule (2) ;
un moyen de calcul (6) qui, quand le paramètre lié à la vitesse du véhicule (2) qui est surveillé satisfait un schème prédéterminé de modification pendant une période prédéterminée, est configuré pour déterminer une vitesse nominale à laquelle le véhicule doit être déplacé sur la base dudit paramètre lié à la vitesse du véhicule qui est surveillé, dans lequel le schème prédéterminé de modification est satisfait si le paramètre lié à la vitesse est sensiblement modifié dans la période prédéterminée ; et
un moyen de réglage (8), pouvant être activé par ledit moyen de calcul (6), qui, lors de l'activation, est configuré pour régler le moteur thermique (3) du véhicule (2) dans un mode de roulage ou un mode de ralenti à ladite vitesse nominale quand ladite vitesse nominale a été déterminée et que le paramètre lié à la vitesse qui est surveillé satisfait le schème prédéterminé de modification, pour régler le moteur thermique (3) du véhicule (2) dans un mode de ralenti quand la vitesse réelle du véhicule a dépassé ladite vitesse nominale d'une valeur maximale prédéterminée sans modifier sensiblement le paramètre lié à la vitesse qui est surveillé, pour régler le moteur thermique (3) du véhicule (2) dans le mode de roulage quand la vitesse réelle du véhicule a diminué jusqu'à ladite vitesse nominale ou est tombée en dessous de ladite vitesse nominale d'une valeur maximale prédéterminée sans modifier sensiblement le paramètre lié à la vitesse qui est surveillé, et pour répéter, sur la base des dites fluctuations de la vitesse réelle du véhicule (2), lesdits changements entre le mode de roulage et le mode de ralenti tant que le paramètre lié à la vitesse qui est surveillé est sensiblement inchangé.

7. Système de commande de vitesse selon la revendication 6, **caractérisé en ce que** le schème comprend une diminution d'environ 40 à 60 % de la valeur actuelle du paramètre lié à la vitesse.

8. Système de commande de vitesse selon la revendication 6 ou 7, **caractérisé en ce que** la durée prédéterminée est comprise entre 0,4 et 5 s.

9. Système de commande de vitesse selon l'une quelconque des revendications 6 à 8, **caractérisé en ce que** le moyen de calcul (6) est configuré pour déterminer la vitesse nominale à laquelle se déplace le véhicule (2) après environ 1 à 10 secondes de surveillance d'un paramètre lié à la vitesse du véhicule sensiblement inchangé.

10. Système de commande de vitesse selon l'une quelconque des revendications 6 à 9, **caractérisé en ce que** le moyen de réglage (8) est configuré, chaque fois que le moteur thermique (3) du véhicule (2) est réglé dans le mode de roulage, pour accélérer le véhicule jusqu'à ce que la vitesse réelle du véhicule ait dépassé ladite vitesse nominale d'une valeur maximale prédéterminée sans modifier sensiblement le paramètre lié à la vitesse qui est surveillé.

11. Système de commande de vitesse selon la revendication 10, **caractérisé en ce que** le moyen de réglage (8) est configuré, chaque fois que le moteur thermique (3) du véhicule (2) est réglé dans le mode de roulage, pour accélérer le véhicule d'environ 0,1 à 0,6 m/s² jusqu'à ce que la vitesse réelle du véhicule ait dépassé ladite vitesse nominale d'une valeur maximale prédéterminée sans modifier sensiblement le paramètre lié à la vitesse qui est surveillé.

12. Système de commande de vitesse selon l'une quelconque des revendications 6 à 11, **caractérisé en ce que** le moyen de réglage (8) est configuré pour régler le moteur thermique (3) du véhicule (2) dans un mode de ralenti quand la vitesse réelle du véhicule a dépassé ladite vitesse nominale d'environ 5 km/h sans modifier sensiblement le paramètre lié à la vitesse qui est surveillé.

13. Système de commande de vitesse selon l'une quelconque des revendications 6 à 12, **caractérisé en ce que** le moyen de réglage (8) est configuré pour régler le moteur thermique (3) du véhicule (2) dans un mode de roulage quand la vitesse réelle du véhicule a diminué jusqu'à ladite vitesse nominale ou est tombée en dessous de ladite vitesse nominale d'environ 5 km/h sans modifier sensiblement le paramètre lié à la vitesse qui est surveillé.

14. Système de commande de vitesse selon l'une quelconque des revendications 6 à 13, **caractérisé en ce que** le système (1) de commande de vitesse comprend en outre un moyen de commande (14) qui est configuré pour accélérer le véhicule (2) et/ou augmenter le couple du moteur thermique (3) du véhicule pour compenser par ex. un roulage en montée et/ou une augmentation de la charge du véhicule sans modifier sensiblement le paramètre lié à la vitesse qui est surveillé.

15. Système de commande de vitesse selon la revendication 14, **caractérisé en ce que** le moyen de commande (14) est configuré pour accélérer le véhicule (2) d'environ 0,1 à 0,6 m/s² pour compenser par ex. un roulage en montée et/ou une charge du véhicule sans modifier sensiblement le paramètre lié à la vitesse qui est surveillé.

16. Système de commande de vitesse selon l'une quelconque des revendications 1 à 15, **caractérisé en ce que** le système (1) de commande de vitesse comprend en outre un contrôle d'interruption (15) qui est configuré pour détecter des modifications notables de paramètres liés à la vitesse du véhicule (2) qui sont surveillés et pour désactiver en vue de cela le moyen de réglage (8).

17. Système de commande de vitesse selon l'une quelconque des revendications 6 à 16, **caractérisé en ce que** le système (1) de commande de vitesse comprend en outre un contrôle d'interruption (15) qui est configuré pour détecter un freinage notable, un mouvement notable de la pédale d'accélérateur et un roulage notable en montée et pour désactiver en vue de cela le moyen de réglage (8).

18. Véhicule, **caractérisé en ce qu'**il comprend le système de commande de vitesse selon l'une quelconque des revendications 6 à 19 et un moteur électrique (19) qui est configuré pour appliquer une puissance au véhicule (2) afin de maintenir une vitesse constante ou de réduire la décélération du véhicule quand le moteur thermique (3) du véhicule est réglé dans un mode de ralenti, et un alternateur (20) qui, quand le moteur thermique (3) du véhicule (2) est réglé dans le mode de ralenti, est actionné par ledit moteur thermique pour alimenter en énergie électrique le moteur électrique (19).

19. Véhicule selon la revendication 18, **caractérisé en ce que** le moteur électrique (19) est configuré pour fonctionner comme un générateur par récupération de freinage, seul ou en combinaison avec l'alternateur (20).
